(19) Europäisches Patentamt

European Patent Office

Office européen des brevets

(11) **EP 1 178 013 A2**

(12) **EUROPEAN PATENT APPLICATION**

(43) Date of publication:
06.02.2002 Bulletin 2002/06

(51) Int Cl.⁷: **C02F 1/20**, B09C 1/00

(21) Application number: 01305930.8

(22) Date of filing: 10.07.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.07.2000 GB 0018773**

(71) Applicant: **Adept Technologies A/S 6100 (DK)**

(72) Inventors:
• **Napper, David, c/o Adept Technologies A/S 6100 Haderslev (DK)**
• **Lauridsen, Anne, Adept Technologies A/S 6100 Haderslev (DK)**

(74) Representative: **Haley, Stephen Gill Jennings & Every, Broadgate House, 7 Eldon Street London EC2M 7LH (GB)**

(54) **Apparatus for in-situ deep well cleaning of contaminated groundwater**

(57) Apparatus for the cleaning of contaminated groundwater in an substantially vertical well. The apparatus comprises an airlift aerator comprising a plurality of vertically mounted gas lines, arranged together with separating and supporting means; a compressed gas source connected to the gas lines; and at least one pipe having an inlet for groundwater and gas and outlet for discharging lifted, aerated cleaned water, volatile pollutants and used gas. A base airlift section comprises at least one inlet at its lower circumference for receiving contaminated groundwater. At least one exchangeable airlift section is disposed, in use, between the aerator and base airlift sections for establishing an artificial groundwater level, the aerator section and exchangeable section being separated from each other by a generally watertight, aerating plug assembly and the exchangeable section and base section being separated from each other by a watertight seal.

Figure 1

## Description

The invention relates to an apparatus for simultaneously treating and extracting, in-situ, contaminated groundwater by passing gas through the groundwater in multiple successive stages as the water is pumped out of a well to clean the water by removing Volatile Organic Components (VOCs) from it through airlifting and aerating.

A method and an apparatus for this purpose is known from US-A-5620593. According to this document, a two stage apparatus is lowered into a well with the lowermost stage of the apparatus placed into the contaminated groundwater of a polluted area. The two stages of the apparatus consist in principle of an aerating section (the upper section) and an airlifting section (the lowermost section). Groundwater is fed into the lower part of the lowermost section and by means of a gas supply to the apparatus and a gas pipe system. Via eductors the groundwater is airlifted to the upper aeration section, in which the removal of VOCs from the groundwater takes place by aeration with the supplied gas, before cleaned water and volatile pollutants are discharged from the apparatus. An aeration to some degree also takes place in the lowermost section. The main aeration is established by means of a plug assembly supplied with aerating gas from a compressed gas source and forming a watertight bottom of the upper section serving also as a seal between the upper and the lowermost section, through which plug assembly the eductor and the gas pipes pass. The plug assembly is provided with flanges forming an intake and has aerating holes in the upper surface flange leading supplied aerating gas upwards into the water passing through the first (upper) section. A vent tube connected with a drain plug mechanism passes likewise through the plug assembly. The upper and the lowermost sections form together a rigid construction, which has to be lowered separately into a well in the ground for the cleaning operation of contaminated groundwater. The radius of influence of the apparatus in use be defined as the difference between the static maximum groundwater elevation or level in the ground area in question and the minimum groundwater elevation or level established through the pumping with the apparatus, the minimum water elevation being at a trough around the apparatus casing and gradually increasing upwards and outwards until it meets the maximum water elevation. The radius of influence is then the horizontal distance between the apparatus casing and the point of tangency in which the two levels meet. The effective area of the apparatus in use is thus limited by this radius of influence and the depth of the apparatus in the ground.

When contamination of groundwater of an area is disclosed through known survey techniques and the contamination source and the size of the contamination is located, the contaminated area generally has a "plume" configuration which tends to grow and spread with the natural movements of the groundwater, unless immediate steps are taken to stop this spreading, i.e. to pump up the contaminated groundwater and clean it. However, a number of variable natural parameters have to be considered in this regard to carry out the cleaning operation successfully. These parameters are, for example, the actual level of the normally raising and falling groundwater, which washes out more or less pollution from the earth and gives varying degrees of concentration of the pollution, the influence from rain, diluting concentration, snow covering the earth and stopping natural vaporization of the pollution causing in return an increased level of pollution in the groundwater, or other climatic influences on the groundwater. Further, the volatility of different types of pollutants disclosed by the survey system could vary widely with the actual temperature, which also has to be taken into account for the cleaning operation.

In an apparatus of the type discussed here the volume of gas to aerate the contaminated water is a function of the quantity of pollutant to be removed from the water and of the volatility of the polluting substance. The gas pressure required for the airlift pumping in the apparatus can be expressed by the formula

$$Scfm = cfm \cdot \sqrt{\frac{nbar + 1\,bar}{1\,bar}}$$

where:

  scfm = standard cubic feet per minute
  cfm = cubic feet per minute
  n = required gas pressure

  and is also determined, in part, by the percentage of the pumping tube under the groundwater level in relation to the percentage of the tube above the water level (or submergence)(cf. "Groundwater and Wells" by Fletcher G. Driscoll (Library of Congress Catalogue Card Number 85-63577 ISBN 0-9616456-0-1), pages 209 and 513).

The total gas flow in the apparatus, i.e. the aerating gas flow and the airlifting gas flow, and hence the energy supply to the apparatus has to be adjusted to the desired pumping rate of the water to create a smooth flow of water without sudden surges in the apparatus. It must also ensure the necessary removal of groundwater from the aquifer in question to collect the pollution based upon estimations from surveys of the water flow through various layers of soil, sand, clay, stones etc that are present in the earth in the treated area and which, in practice, together with raising and falling of the groundwater level, temperature changes in the underground, chemical influences from the polluting substances etc. represent rather variable parameters.

To clean contaminated groundwater from a polluted area of a certain extension a number of in-situ aerators may have to be placed as a sort of a barrier through the area, the radius of influence of the aerators determining the spacing between adjoining aerators, so that a hydraulic block is formed by the aerators stopping further spreading of contaminated groundwater.

With the aerator system according to US-A-5620593, as it uses only one airlift section, is limited in operation by its possible submergence into the underground. This makes the system difficult to adapt to changing depths of contaminated water. It is clear that the optimal yield of the apparatus depends highly on the positioning of the airlift part of the apparatus with respect to the groundwater level and in this respect the above apparatus, with its two-section rigid construction can be difficult to operate satisfactorily. Another disadvantage of this known aerator system is its need for manual adjustment based upon the area survey data during operation. This is especially so when a number of aerators are used within the same area with contaminated groundwater and each aerator has to be adjusted individually and manually. The cleaning operation may therefore be consuming both in time and manpower and hence less cost-effective.

It is therefore the object of the present invention to provide an improved in-situ underground aerator system which is constructed with a number of exchangeable airlift modules with means for stepwise pumping within the apparatus and which is easy to replace. It is also desirable to provide a system which has an integrated automatic control system allowing for adjustments of the cleaning yield during operation, making the system flexible with respect to variations in natural influences upon groundwater occurrence.

According to the present invention, there is provided an apparatus for the cleaning of contaminated groundwater in an substantially vertical well, the apparatus comprising:

an airlift aerator comprising a plurality of vertically mounted gas lines, arranged together with separating and supporting means; a compressed gas source connected to the gas lines; and at least one pipe having an inlet for groundwater and gas and outlet for discharging lifted, aerated cleaned water, volatile pollutants and used gas;
a base airlift section comprising at least one inlet at its lower circumference for receiving contaminated groundwater;
at least one exchangeable airlift section disposed, in use, between the aerator and base airlift sections for establishing an artificial groundwater level, the aerator section and exchangeable section being separated from each other by a generally watertight, aerating plug assembly and the exchangeable section and base section being separated from each other by a watertight seal;
a through-going upper educator tube between the bottom of the exchangeable section and the aerator sections and having a first common airlift gas line and;
the exchangeable section and base section having a through-going lower educator tube stretching from the lower surface of the plug assembly to the bottom of the base section and a second common airlift pumping gas line within the lower educator tube, the lower part of the upper educator tube (15) and the upper part of the lower educator tube (14) being parallely mounted and overlapping each other within the exchangeable section of the apparatus, allowing, in use airlifted and partly aerated water to pass from the lower educator tube into the upper educator tube within the exchangeable section.

The invention will now be described with reference to the accompanying drawings, in which:

Figure 1 is a vertical sectional view through an aerator system according to the invention and consisting of one aerator section and two airlift sections;
Figure 2 shows the supporting fin construction of an eductor tube with figures 2a and 2b being vertical sectional views of the construction and figure 2c being a horizontal sectional view of the construction;
Figure 3 shows the plug assembly construction with figure 3a being a vertical sectional view through the construction and figure 3b a top view of it;
Figure 4 is a general view of additional aerating means for an airlift section; and
Figure 5 is a vertical sectional view through means for draining water from an upper section of the apparatus.

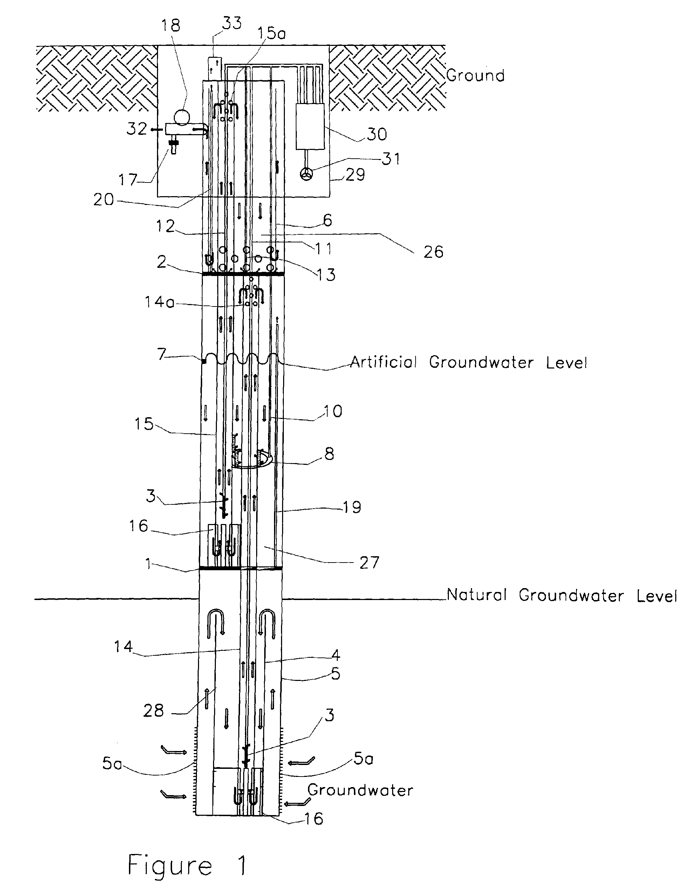

Referring to figure 1 an apparatus has an aerator or uppermost section 26 and following lower airlift sections 27, 28. The aerator section 26 is connected via a control box 30 forming an inlet and by known means for controlling the gas supply to the apparatus with a gas source 31 (for instance for compressed gas), and has a water discharge outlet 32 with a valve 17 for water sampling. It also comprises a water flow meter 18, and an off gas outlet 33. The upper part of the aerator section 26 may be housed in a well curb 29 with a removable cover (not shown). The bottom of section 26 comprises a plug assembly 2, details of which are described below. Within the well casing 5 the aerator section 26 further contains the upper part of a through-going eductor tube 15 with an inner gas line 12 and likewise through-going gas lines 10 and 11, a gas line 13 for feeding gas to the plug assembly 2 and a vent tube 20 for aeration gas from the lower sections 27 and 28. An upward opening, upper concentric pipe 6 in section 26 directs water flow within the section.

The following section, airlift section 27, contains, within the wall casing 5, the lower part of the through-going eductor tube 15 with its inner gas line 12 from section 26, aerating means 3 at the lower end of the gas line 12, supporting fins 16 mounted at the lower end of the eductor tube 15, the upper part of a through-going lower eductor tube 14 with outlets 14a at its upper end for water from the lowermost section 28, a through-going gas line 11 within the lower eductor tube 14, for compressed gas to the lowermost section 28, a gas line 10 for gas supply to additional aerating means 8 in section 27, a water level sensor 7, a through-going lower vent tube 19, for used gas from the lowermost section 28 and a seal 1 forming the bottom of section 27.

The mutual overlapping within section 27 between the lower part of eductor tube 15 and the upper part of eductor tube 14 with their respective gas lines 12 and 11, causes under an airlift operation such that section 27 acts as an intermediate groundwater reservoir with an artificial groundwater level due to the fact that the water flow within this section is brought to and changes from eductor tube 14 to eductor tube 15 before the water is further airlifted to section 26.

The lowermost airlift section 28 has inlets 5a for groundwater at the lower part of its circumference and contains, within the well casing 5, an upwardly open, lower concentric pipe 4 for leading incoming groundwater to the airlifting means, the lower part of the through-going eductor tube 14 with its inner gas line 11 from section 27, aerating means 3 at the lower end of gas line 11 and supporting fins 16 mounted at the lower end of the eductor tube 14 for its support on the bottom of the section 28.

Double line arrows indicate in figure 1 the groundwater flows in the apparatus, single line arrows the aerating gas flows.

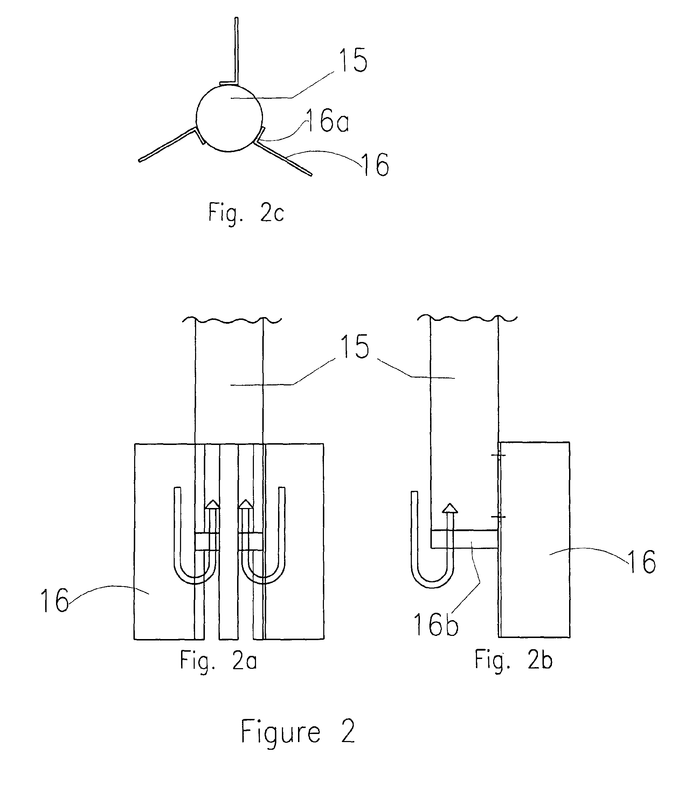

In figure 2 shows the fin construction at the lower end of eductor tube 15 for the support of the latter on bottom or seal 1 of section 27. A corresponding generally identical fin construction is used for the support of eductor tube 14 on the bottom of section 28. At least three fins 16 stretching radially out from lower part of the eductor tube 15 are fastened to the circumference of the latter with equal spaces by means of angle irons 16a in a generally known manner. The lower end of each fin 16 projects over the lower end of the eductor tube 15 and is mounted in a position resting upon the separating means 1 between sections 27 and 28, or in case of eductor tube 14 upon the bottom of section 28, thus positioning the lower ends of the eductor tubes 15, 14 at a distance from the bottoms of the respective sections 27 and 28 thereby allowing incoming or airlifted groundwater to pass freely into the lower ends of the eductor tubes. A supporting metal ring 16b may be used at the lower ends of the inner edges of the fins 16 for further bracing of the latter. Again, double line arrows indicate the water flow from below up into the eductor tube 15.

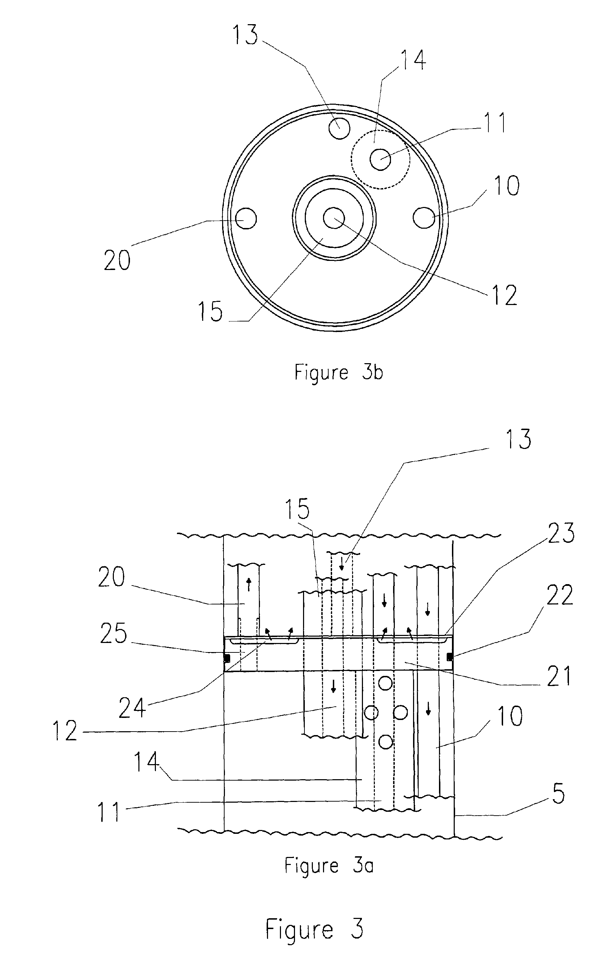

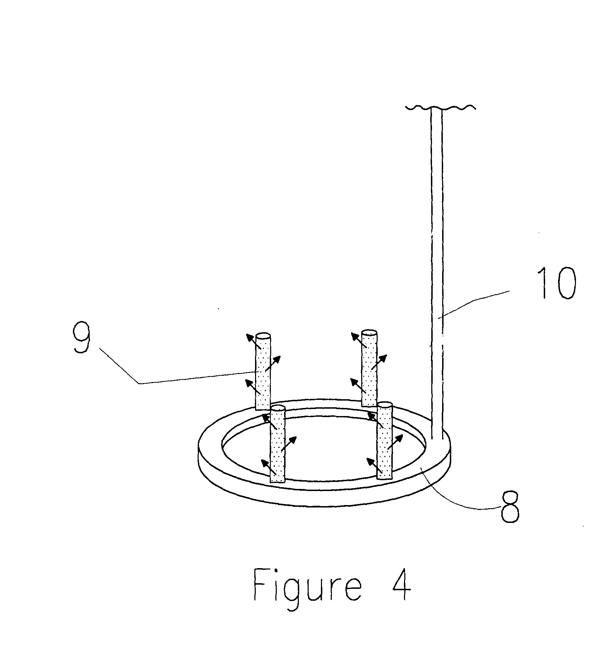

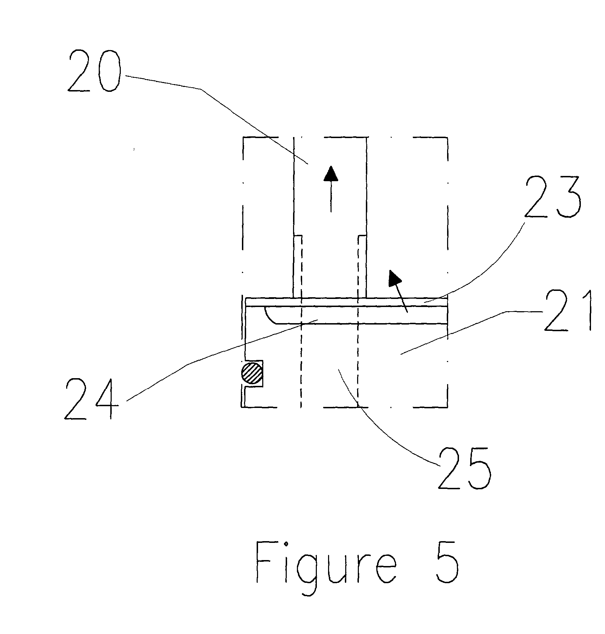

Figure 3 shows in more detail the construction of the plug assembly 2 that separates sections 26 and 27 and forms the bottom of the aerator section 26. The plug body 21 is of a suitable, solid watertight material and is tightened against the well casing 5 by means of a sealing O-ring 22. The upper surface of the body 21 is provided with a circular, flat-bottomed groove 24 stretching over the greater part of the surface, whilst a porous plastics material plate 23 covers the total upper surface of the solid body 21, leaving a space between the groove 24 and the lower surface of the plate 23. The body 21 as well as the plate 23, has through holes for the passage of the upper eductor tube 15 with its gas line 12, for the gas line 11 to the lower eductor tube 14 and for the gas line 10 to the additional aerating means 8 and 9 in section 27. The passages of the tube and the gas lines are watertight in the body 21. A further passage 25 allows air and used gas from the lower sections 27 and 28 to pass up through the body 21 and via an upper vent tube 20 in section 26 to the gas outlet 33 of the apparatus. A gas line 13 connected via the control box 30 to the gas source 31 connects into the space between the groove 24 and the plate 23 to direct aerating gas to the space and hence to the lower part of section 26 for the main aerating function of this section.

Single line arrows in figure 3a indicate gas flow. An example of the positioning of tubes and gas lines in connection with the plug assembly 2 is shown from above in figure 3b, where 14 indicates the top of the eductor tube 14 resting in mounted position against the lower surface of the body 21.

Figure 4 is a more detailed view of the additional aerating means for an airlift section and shows a circular tube 8 with adjoining upturned aerator tubes 9 with holes for out-streaming compressed gas, which is fed to the tube 8 from the compressed gas source 31 via the control box 30 and the gas line 10. The additional aerating means 8, 9 are mounted in an airlift section, in the shown example in section 27 (cf. figure 1), around the eductor tube 14 to provide an additional aeration effect to the one already established in the section by the aerating means 3 at the end of the gas line 12 in the eductor tube 15. Again, single line arrows indicate gas flow out of the aerators 9.

Figure 5 is a closer view of a plug drain mechanism for emptying water from an upper section when removing the latter from a well during dismantling or for the exchange of the airlift sections of the apparatus according to the invention. The plug drain mechanism is intended to be mounted in the plug assembly 2 as well as in a seal 1 separating the two airlift sections (sections 27 and 28 in figure 1) and consists of a tube stub 25 passing through the plug body 21 and its cover 23 and projecting up into the lower part of the upper section. The stub 25 has a diameter slightly smaller than the diameter of the vent tube 20 allowing the lower end of the latter to slide down over the stub 25 in a removable airtight and watertight connection. A similar use of a plug drain mechanism is used for instance through seal 1, where the stub debouches in the vent tube 19 in section 27 (figure 1). When removing an upper section of the apparatus from a well the vent tube 20 (or 19) is lifted from the tube stub 25 allowing water to stream through the tube stub 25 and remain in the well, facilitating the removal of the section.

In use, contaminated groundwater is fed to the in-situ apparatus according to the invention through inlets 5a at the lower end of airlift section 28, airlifted to section 27 and partly aerated in a known manner by means of the lower concentric pipe 4, the eductor tube 14 and the gas line 11 with its aerating means 3. Used aeration gas escapes from section 28 through vent tube 19 to section 27. In airlift section 27 the airlifted groundwater passes out into the section through outlets 14a at the top of the eductor tube 14 until an artificial new groundwater level is established in this section as an intermediate pumping step before the airlifting of water to the next section, the aerator section 26, is started. In addition to the airlifting and the initial aerator with known means in the form of tube 15, gas line 12 and aerators 3 in section 27 further aeration takes place with the additional aerating means 8, 9. The artificial groundwater level is controlled by the water level sensor 7, which is connected to the control box 30 in a known manner for further control of the supply of pressurized gas to the section. Used gas escapes from section 27 through vent tube 20. Thus section 27 acts as an inserted, artificial groundwater reservoir, before the groundwater is airlifted to section 26 and passes out into the latter through outlets 15a at the top of tube 15 for the final aeration and cleaning of the water from VOCs, which are led out from the apparatus through outlet 33 together with used aeration gas, whilst the cleaned water passes out through water outlet 32.

It will be understood from the above that the insertion of one or more exchangeable sections between the uppermost aerator section and the lowermost airlift section with its groundwater inlets and the possibility of having the exchangeable section or sections establishing the artificial groundwater level giving exactly the length or lengths which enable the user to have an in-situ cleaning apparatus ideal for the actual cleaning task and that the integration of an automatic, electronic control system into the apparatus makes the latter especially suitable for meeting the very diverse challenges of the cleaning task. In this connection it should be obvious that the apparatus as well as other apparatus on the same task can be remote controlled from a single computer if necessary.

**Claims**

1. Apparatus for the cleaning of contaminated groundwater in an substantially vertical well, the apparatus comprising:

   an airlift aerator comprising a plurality of vertically mounted gas lines, arranged together with separating and supporting means; a compressed gas source connected to the gas lines;

   and at least one pipe having an inlet for groundwater and gas and outlet for discharging lifted, aerated cleaned water, volatile pollutants and used gas;

   a base airlift section comprising at least one inlet at its lower circumference for receiving contaminated groundwater;

   at least one exchangeable airlift section disposed, in use, between the aerator and base airlift sections for establishing an artificial groundwater level, the aerator section and exchangeable section being separated from each other by a generally watertight, aerating plug assembly and the exchangeable section and base section being separated from each other by a watertight seal;

   a through-going upper educator tube between the bottom of the exchangeable section and the aerator sections and having a first common airlift gas line; and

   the exchangeable section and base section having a through-going lower eductor tube stretching from the lower surface of the plug assembly to the bottom of the base section and a second common airlift pumping gas line within the lower eductor tube, the lower part of the upper eductor tube and the upper part of the lower eductor tube being parallely mounted and overlapping each other within the exchangeable section of the apparatus, allowing, in use airlifted and partly aerated water to pass from the lower eductor tube into the upper eductor tube within the exchangeable section.

2. An apparatus according to claim 1, further comprising second means for aerating airlifted water within the exchangeable section.

3. An apparatus according to claims 1 to 5, in which the additional aerating means in the exchangeable section comprises a circular aerator tube surrounding at least the upper educator tube below the water level in the section and mounted on the lower end of a gas line for leading compressed gas from the gas source to the aerator tube, and having a gas inlet for the gas from the gas line and a number of upturned gas diffusers for spreading gas into the water in the section in use.

4. An apparatus according to claim 1, 2 or 3, further comprising means for draining water from the aerator and exchangeable sections.

5. Apparatus according to claim 1, 2, 3 or 4, further comprising means for supporting the eductor tubes at their lower ends against the plug assembly and the seal, the supporting means comprising a plurality of fins circumferentially fastened with generally equal spacing to the lower part of each respective educator tube by means of fittings at their inner, vertical edges, the fins forming an elongation of a radial plane of the respective tube and with their lower ends projecting over the lower end of the respective tube and resting upon the plug or seal and thereby positioning the lower end of the tube at a distance from the plug or seal.

6. Apparatus according to any of claims 1 to 5 in which the plug assembly consist of a plug body of solid, water impermeable material, the body being tightened along its vertical edges against the well case in use by an elastic O-ring and having in its upper surface a circular, flat-bottomed groove stretching over the greater part of the surface, and a porous plate of plastics material, the plate covering the total upper surface of the solid body defining a space between the groove and the lower surface of the plate, the body and the plate having through-going holes for the passage of gas lines, and other pipes and stubs and the lower educator tube; and

> the plate further comprising a hole for the passage of a gas line leading gas from the gas source via the control box to the space formed between the plate and the grove.

7. An apparatus according to any of claims 1 to 6, in which the means for draining water from the upper sections comprises a pipe stub having an external diameter corresponding with the internal diameter of a vent tube enabling the latter to slide down over the stub to provide a watertight, removable tightening between the stub and the vent tube, the means allowing for draining water from the section by lifting of the vent tube from the stub.

8. An apparatus according to any of claims 1 to 7, further comprising control means for controlling, in real time, the gas supply to the pipes dependent upon local area parameters.

9. Apparatus according to claim 8, wherein the local area parameters include at least one of:

> actual groundwater level, the size of the polluted area and the concentrations of pollution in contaminated groundwater, pollution level in the from discharge, cleaned groundwater, and pollution contact in discharged off-gas from the apparatus.

Figure 1

Fig. 2c

15

16a

16

Fig. 2a

16

Fig. 2b

15

16

16b

Figure 2

Figure 3b

Figure 3a

Figure 3

Figure 4

Figure 5